(19) Europäisches Patentamt
European Patent Office
Office européen des brevets

(11) Veröffentlichungsnummer : **0 444 475 B1**

(12) **EUROPÄISCHE PATENTSCHRIFT**

(45) Veröffentlichungstag der Patentschrift :
**27.04.94 Patentblatt 94/17**

(51) Int. Cl.[5] : **C04B 35/00,** C08L 59/00

(21) Anmeldenummer : **91102055.0**

(22) Anmeldetag : **14.02.91**

(54) **Thermoplastische Massen für die Herstellung keramischer Formkörper.**

(30) Priorität : **21.02.90 DE 4005374**
**07.07.90 DE 4021741**

(43) Veröffentlichungstag der Anmeldung :
**04.09.91 Patentblatt 91/36**

(45) Bekanntmachung des Hinweises auf die Patenterteilung :
**27.04.94 Patentblatt 94/17**

(84) Benannte Vertragsstaaten :
**BE CH DE FR GB IT LI NL SE**

(56) Entgegenhaltungen :
**EP-A- 0 114 746**
**EP-A- 0 329 475**
**DE-A- 3 006 098**

(73) Patentinhaber : **BASF Aktiengesellschaft**
**Carl-Bosch-Strasse 38**
**D-67063 Ludwigshafen (DE)**

(72) Erfinder : **Sterzel, Hans-Josef, Dr.**
**Wasgauring 3**
**W-6701 Dannstadt-Schauernheim (DE)**
Erfinder : **Ter Maat, Johan Herman Hendrik**
**F 2,8**
**W-6800 Mannheim 1 (DE)**
Erfinder : **Ebenhoech, Johan, Dr.**
**Klagenfurter Strasse 1**
**W-6700 Ludwigshafen (DE)**
Erfinder : **Meyer, Marion, Dr.**
**Mozartstrasse 6**
**W-6737 Boehl-Iggelheim (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft thermoplastische Massen für die Herstellung keramischer Formkörper, enthaltend

A) 40 - 65 Vol.% eines sinterbaren anorganischen nichtmetallischen Pulvers

B) 35 - 60 Vol.% einer Mischrung aus

B1) 70 - 90 Gew.-% eines Polyoxymethylenhomo- oder -copolymerisats mit bis zu 10 mol-% Comonomereinheiten und

B2) 10 - 30 Gew.-% eines Polyoxymethylencopolymerisats mit einem Comonomeranteil von 20 bis 99 mol-%, Poly-1,3-dioxolan, Poly-1,3-dioxan oder Poly-1,3-dioxepan, oder eines in B1) homogen gelösten oder mit einer mittleren Teilchengröße von weniger als 1 µm in B1) dispergierten Polymerisats oder deren Mischungen

als Bindemittel, und

C) 0 - 5 Vol.% eines Dispergierhilfsmittels.

Außerdem betrifft die Erfindung die Verwendung derartiger thermoplastischer Massen zur Herstellung von keramischen Formkörpern sowie die keramischen Formkörper selbst. Schließlich betrifft die Erfindung auch ein Verfahren zur Entfernung des Bindemittels aus einem Formkörper aus einer derartigen thermoplastischen Masse.

Es ist bekannt, Formteile aus keramischen Materialien dadurch herzustellen, daß man ein Keramikpulver mit einem thermoplastischen Harz vermischt, die Mischung zu einem grünen Formkörper verformt, das thermoplastische Harz entfernt und anschließend diesen Grünling zu dem Formkörper versintert. Gemäß der EP-PS 125 912 wird der Grünling vor seiner Sinterung zu seiner im wesentlichen endgültigen Gestalt bearbeitet. Als thermoplastisches Harz bzw. Bindemittel werden z.B. Polystyrol, Polypropylen, Polyethylen und Ethylen-Vinylacetat-Copolymere eingesetzt. Diese Bindemittel werden aus dem Grünling durch Erhitzen auf Temperaturen von 300 bis 550°C während 3 bis 8 Stunden entfernt. Dabei werden die Bindemittel thermisch gespalten. Es muß sehr vorsichtig und langsam auf diese Temperaturen erhitzt werden, damit der Grünling nicht durch unkontrollierten Zerfall der organischen Substanz und damit verbundener Rißbildung geschädigt wird. Aus diesem Grunde soll die Aufheiztemperatur nur 4°C/Stunde betragen. In der US-PS 4 671 912 werden sogar niedrigere Aufheiztemperaturen von 1 bis 2°C/Stunde, zumindest solange, bis die Hälfte des Bindemittels entfernt ist, empfohlen. Diese langen Aufheizperioden von mehreren Tagen vermindern die Wirtschaftlichkeit dieser Verfahren stark.

Zur Beschleunigung der Aufheizzeiten wird in der EP-PS 115 104 empfohlen, als Bindemittel ein Gemisch aus einem oxidierten Paraffinwachs oder einem oxidierten mikrokristallinen Wachs mit einer höheren Fettsäure einzusetzen. In der EP-PS 114 746 wird als Bindemittel ein Polyacetal vorgeschlagen, das als weitere Komponente bis zü 10 % Polyäthylen, Polypropylen oder Äthylen/Vinylacetat - Copolymer enthalten kann.

Ein Nachteil bei allen diesen Verfahren, bei denen Thermoplaste oder Wachse eingesetzt werden, besteht darin, daß der Grünkörper zwecks pyrolytischer Entfernung des Bindemittels auf Temperaturen oberhalb des Erweichungspunktes des Bindemittels erhitzt werden muß, wodurch die Gefahr einer Verformung besteht. Zur Vermeidung einer solchen Verformung wird daher in der US-PS 4 708 838 und in der JP-OS 62/12674 vorgeschlagen, den Grünkörper in einem keramischen Pulver mit hoher thermischer Stabilität einzubetten.

Es ist aber auch bekannt, das Bindemittel aus dem Grünling nicht pyrolytisch sondern durch Extraktion mit einem Lösungsmittel zu entfernen. Gemäß der JP-OS 62/278160 wird als Lösungsmittel überkritisches Kohlendioxid bei 60°C und einen Druck von 200 $kg/cm^2$, gemäß der EP-PS 206 685 flüssiges Kohlendioxid bei Temperaturen von -30°C bis 31,1°C eingesetzt. Für die Durchführung dieser Verfahren benötigt man jedoch spezielle Druck-Apparaturen.

In den deutschen Patentanmeldungen P 39 26 869 und P 40 00 278 werden Verfahren zur Herstellung eines anorganischen Sinterformteils durch Verformen eines Gemisches aus einem sinterbaren anorganischen Pulver und Polyoxymethylen, gegebenenfalls mit Comonomeren (z.B. gemäß EP-A 114 746) als Bindemittel durch Spritzgießen oder Strangpressen zu einem Grünkörper, Entfernung des Bindemittels und Sintern beschrieben, wobei man das Polyoxymethylen durch Behandeln des Grünkörpers in einer gasförmigen, säurehaltigen Atmosphäre entfernt. Als Säuren werden bei diesem Verfahren Protonensäuren, also Säuren, die bei Reaktion mit Wasser in ein Proton (hydratisiert) und ein Anion gespalten werden, oder $BF_3$ oder $BF_3$-Addukte eingesetzt.

Bei Verwendung von reinem Polyoxymethylen mit geringem Comonomeranteil als Bindemittel in den Verfahren der vorstehend genannten älteren deutschen Patentanmeldungen bei der Herstellung von Formkörpern bzw. Formteilen mit größeren Wandstärken tritt jedoch ein Problem auf, welches durch die hohe Kristallisationsgeschwindigkeit des Polyoxymethylens hervorgerufen wird. Die Schmelze erstarrt an der Wand der beim Spritzgießen verwendeten, normalerweise gekühlten Form schneller als im Inneren, d.h. der innere Bereich

des Formkörpers kristallisiert später als der äußere Teil. Da die Kristallisation von einer Volumenkontraktion begleitet ist, entstehen Risse im Inneren des Formkörpers, da die bereits erstarrten Außenteile der Volumenkontraktion nicht mehr folgen können.

In der bereits genannten EP-A 114 746 wird vorgeschlagen, vorzugsweise ein Polyoxymethylencopolymerisat mit 20 bis 80 Mol.% Comonomeranteil zu verwenden. Derartige Copolymerisate weisen einen niedrigeren Schmelzpunkt, eine niedrigere Kristallinität und eine erhöhte Weichheit und Flexibilität gegenüber den entsprechenden Polyoxymethylenhomopolymerisaten auf.

Dies hat jedoch auch zur Folge, daß die Abkühlzeiten deutlich verlängert und die Klebeneigung des Formteils in der Form erhöht wird. Die Entbinderung muß wegen der niedrigeren Schmelzpunkte der Copolymerisate auch bei niedrigeren Temperaturen vorgenommen werden, wodurch die zur Entbinderung benötigte Zeit länger wird.

Der vorliegenden Erfindung lag daher die Aufgabe zugrunde, thermoplastische Massen für die Herstellung keramischer Formkörper zur Verfügung zu stellen, die die vorstehend beschriebenen Nachteile nicht aufweisen und aus denen in wirtschaftliche Verfahren riß- und porenfreie keramische Formkörper hergestellt werden können.

Diese Aufgabe wird erfindungsgemäß gelöst durch thermoplastische Massen gemäß Anspruch 1.

Bevorzugte Massen dieser Art sind den Unteransprüchen zu entnehmen.

Als Komponente A) enthalten die erfindungsgemäßen thermoplastischen Massen 40 bis 65, vorzugsweise 40 bis 60 Vol.% eines sinterbaren anorganischen nichtmetallischen Pulvers. Bevorzugte Pulver dieser Art sind oxidische Keramikpulver wie $Al_2O_3$, $ZrO_2$ und $Y_2O_3$ aber auch nichtoxidische Keramikpulver wie SiC, $Si_3N_4$, TiB und AlN, die einzeln oder in Form von Mischungen eingesetzt werden können. Die mittlere Korngröße (Teilchendurchmesser $d_{50}$, d.h. der Durchmesser oberhalb und unterhalb dessen jeweils die Teilchengröße von 50 Gew.-% der Teilchen liegt) liegt im allgemeinen im Bereich von 0,1 bis 50, vorzugsweise 0,1 bis 30, insbesondere 0,2 bis 10 µm.

Ein Teil der Komponente A), vorzugsweise nicht mehr als 50 Gew.-%, insbesondere 10 bis 20 Gew.-%, bezogen auf die Komponente A) kann durch anorganische Fasern oder Whisker ersetzt werden, z.B. aus $Al_2O_3$, SiC oder $Si_3N_4$.

Als Komponente B) enthalten die erfindungsgemäßen thermoplastischen Massen 35 bis 60, vorzugsweise 40 bis 55 Vol.% einer Mischung aus

B1) 70 bis 90, vorzugsweise 80 bis 88 Gew.-%, bezogen auf B), eines Polyoxymethylenhomopolymerisats oder eines Polyoxymethylencopolymerisats mit maximal 10, vorzugsweise 2 bis 7 mol-% an Comonomereinheiten, und

B2) 10 bis 30, vorzugsweise 10 bis 25, insbesondere 12 bis 20 Gew.-% eines Polyoxymethylencopolymerisats mit einem Comonomeranteil von 20 bis 99, vorzugsweise 25 bis 95 und insbesondere 25 bis 80 mol-%, Poly-1,3-dioxolan, Poly-1,3-dioxan oder Poly-1,3-dioxepan, oder eines in B1) homogen gelösten oder mit einer mittleren Teilchengröße von weniger als 1 µm, vorzugsweise 0,01 bis 0,9, insbesondere 0,1 bis 0,8 µm dispergierten Polymerisats oder deren Mischungen als Bindemittel.

Die Polyoxymethylenhomo- oder -copolymerisate sind dem Fachmann an sich bekannt und in der Literatur beschrieben.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung bevorzugte Polyoxymethylencopolymere B1 und gegebenenfalls B2 enthalten neben den wiederkehrenden Einheiten $-OCH_2$-noch wiederkehrende Einheiten der Formel

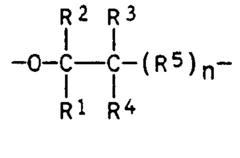

wobei $R^1$ bis $R^4$ unabhängig voneinander ein Wasserstoffatom, eine $C_1$-$C_4$-Alkylgruppe oder eine halogensubstituierte Alkylgruppe mit 1-4 C-Atomen und $R^5$ eine $-CH_2$-, $-CH_2O$-, eine $C_1$-$C_4$-Alkyl- oder $C_1$-$C_4$-Haloalkyl substituierte Methylengruppe oder eine entsprechende Oxymethylengruppe darstellen und n einen Wert im Bereich von 0-3 hat. Vorteilhafterweise können diese Gruppen durch Ringöffnung von cyclischen Ethern in die Copolymere eingeführt werden. Bevorzugte cyclische Ether sind solche der Formel

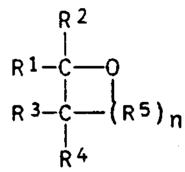

wobei $R^1$-$R^5$ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und Dioxepan als cyclische Ether genannt sowie linare Oligo- oder Polyformale wie Polydioxolan oder Polydioxepan als Comonomere genannt.

Prinzipiell können die Polyoxymethylencopolymere B1) und B2) die gleichen wiederkehrenden Einheiten aufweisen, d.h. sich nur in derem Anteil unterscheiden.

Als Komponente B) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel

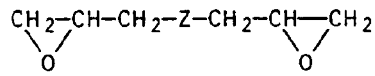

wobei Z eine chemische Bindung, -O- oder -ORO- (R= $C_1$-$C_8$-Alkylen oder $C_2$-$C_8$-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2-8-C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylenhomo- bzw. Copolymerisate haben Schmelzpunkte von mindestens 150°C und Molekulargewichte (Gewichtsmittelwert) im Bereich von 5000 bis 150000, vorzugsweise von 7000 bis 60000.

Als Komponente B2) bevorzugt geeignet sind
Poly-1,3-dioxolan $-O-CH_2-O-CH_2-CH_2-$ oder
Poly-1,3-dioxan $-O-CH_2-O-CH_2-CH_2-CH_2-$ oder
Poly-1,3-dioxepan $-O-CH_2-O-CH_2-CH_2-CH_2-CH_2$
oder deren Mischungen untereinander bzw. mit Polyoxymethylencopolymeren der vorstehend beschriebenen Art. Poly-1,3-dioxepan wird wegen seiner schnellen Depolymerisation unter sauren Bedingungen besonders bevorzugt.

Poly-1,3-dioxolan, Poly-1,3-dioxan und Poly-1,3-dioxepan können nach analogen Verfahren wie die Polyoxymethylenhomo- bzw. -copolymerisate hergestellt werden, so daß sich hier nähere Angaben erübrigen. Das Molekulargewicht ist an sich nicht kritisch und liegt im allgemeinen im gleichen Bereich wie das Molekulargewicht der Polyoxymethylenhomo- oder -copolymerisate.

Unter den Bedingungen der Compoundierung oder Spritzgußverarbeitung tritt zwischen den Polyoxymethylenpolymerisaten B1) und B2) praktisch keine Umacetalisierung ein, d.h. es findet praktisch kein Austausch von Comonomereinheiten statt.

Damit wird auch der Kristallitschmelzpunkt der Komponente B1) nicht erniedrigt, es wird lediglich die Kristallisationszeit etwas erhöht (was gewünscht ist) und der kristalline Anteil etwas reduziert. Da der Kristallitshmelzpunkt der Hauptkomponente B1) nicht reduziert wird, bleibt die hohe Wärmeformbeständigkeit erhalten und die Gefahr des Verzugs bei der katalytischen Entbinderung wird verringert.

Als Komponente B2) eignen sich weiterhin Polymerisate, die in Polyoxymethylenhomo- oder -copolymerisat B1) homogen löslich oder darin in der geforderten Teilchengröße dispergierbar sind.

Bevorzugte Polymerisate dieser Art sind aliphatische Polyurethane, aliphatische unvernetzte Polyepoxide, Poly-($C_2$-$C_6$)-alkylenoxide aliphatische Polyamide und Polyacrylate sowie deren Mischungen.

Geeignete aliphatische Polyurethane werden in bekannter Weise durch Polyaddition von alkalischen Polyisocyanaten, insbesondere aliphatischen Diisocyanaten und aliphatischen Polyhydroxylverbindungen wie Polyestern, Polyethern, Polyesteramiden oder Polyacetalen oder Gemischen davon hergestellt, gegebenenfalls in Anwesenheit von Kettenverlängerern.

Geeignete aliphatische Polyisocyanate sind insbesondere aliphatische Diisocyanate der allgemeinen Formel

$$OCN\text{-}R^6\text{-}NCO$$

in der $R^6$ ein gesättigter geradkettiger oder verzweigter aliphatischer Rest mit 1 bis 20, vorzugsweise 2 bis 12 C-Atomen oder ein unsubstituierter oder substituierter gesättigter cycloaliphatischer zweiwertiger Rest mit 4 bis 20, vorzugsweise 6 bis 15 C-Atomen ist.

$R^6$ kann in obiger Formel auch eine Kombination von zweiwertigen offenkettigen aliphatischen und cycloaliphatischen Resten darstellen und beispielsweise die Bedeutung

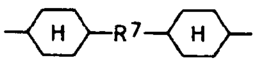

haben, worin $R^7$ einen gesättigten geradkettigen oder verzweigten aliphatischen Rest mit 1 bis 8, vorzugsweise 1 bis 3 C-Atomen bedeutet. Die beiden Ringe stehen dabei vorzugsweise für das unsubstituierte Cyclohexan, während $R^7$ vorzugsweise die Methylen-, Ethylen-, Methylmethylen-oder Dimethylmethylen-Gruppe bedeutet.

Falls $R^6$ einen offenkettigen zweiwertigen Rest darstellt, so steht er vorzugsweise für einen unverzweigten Alkylidenrest $(-CH_2)_n$- mit n = 2 bis 12. Beispiele hierfür sind der Ethyliden-, Propyliden-, Pentamethylen- und der Hexamethylenrest sowie der 2-Methylpentamethylen-, der 2,2,4-Trimethyl-hexamethylen- oder der 2,4,4-Trimethylhexamethylenrest. Diisocyanate dieses Typs, die besonders bevorzugt werden, sind das Hexamethylen-diisocyanat sowie 2,2,4- und 2,4,4-Trimethylhexamethylen-diisocyanat.

Wenn $R^6$ in obiger Formel einen cycloaliphatischen Rest bedeutet, so ist dies bevorzugt der unsubstituierte oder substituierte Cyclohexanrest. Beispiele für Diisocyanate dieses Typs sind 1,2- oder 1,4-Di-(iso-cyanatomethyl)-cyclohexan oder Isophorondiisocyanat.

Die Diisocyanate können auch in oligomerer, beispielsweise in dimerer oder trimerer Form zum Einsatz kommen. Anstelle der Polyisocyanate können auch in bekannter Weise blockierte Polyisocyanate verwendet werden, die man aus den genannten Isocyanaten, z.B. durch Addition von Phenol oder Caprolactam erhält.

Als aliphatische Polyhydroxylverbindungen kommen Polyether, wie Polyethylenglykolether, Polypropylenglykolether und Polybutylenglykolether, Poly-1,4-butandiolether oder Mischpolyether aus Ethylenoxid und Propylenoxid in Betracht. Außerdem können für diesen Zweck Polyesteramide, Polyacetale und vorzugsweise aliphatische Polyester eingesetzt werden, wobei alle diese Verbindungen freie OH-Endgruppen besitzen.

Bei den vorzugsweise verwendeten aliphatischen Polyestern handelt es sich im wesentlichen um unvernetzte Polyester mit Molekulargewichten von 500 bis 10 000, vorzugsweise von 500 bis 5 000. Hinsichtlich der Säurekomponente leiten sie sich von unverzweigten und/oder verzweigten aliphatischen Dicarbonsäuren ab, wie z.B. Diarbonsäuren der allgemeinen Formel

$$HOOC\text{-}(CH_2)_n\text{-}COOH$$

mit n = 0 bis 20, vorzugsweise 4 bis 10, insbesondere Adipinsäure und Sebacinsäure. Auch cycloaliphatische Dicarbonsäuren, wie Cyclohexandicarbonsäure sowie Gemische mit den obigen aliphatischen Dicarbonsäuren können für diesen Zweck eingesetzt werden.

Als Alkoholkomponente für diese Polyester kommen vor allem unverzweigte oder verzweigte aliphatische primäre Diole, wie z.B. Diole der allgemeinen Formel

$$HO\text{-}(CH_2)_m\text{-}OH$$

in Betracht, in der m = 2 bis 12, vorzugsweise 2 bis 6 bedeutet. Genannt seien hier insbesondere Ethylenglykol, 1,4-Butandiol, 1,6-Hexandiol und 2,2-Dimethylpropandiol-1,3 sowie Diethylenglykol. Auch cycloaliphatische Diole, wie Bis-hydroxymethyl-cyclohexane, oder Gemische mit den aliphatischen Diolen sind hierfür geeignet.

Die Polyester können aus jeweils einer Dicarbonsäure und einem Diol, aber auch, wie erwähnt, aus Gemischen mehrerer Dicarbonsäuren und/oder mehreren Diolen hergestellt werden.

Als Kettenverlängerer bei der Herstellung der Polyurethane sind vor allem niedermolekulare Polyole, insbesondere Diole sowie Polyamine, insbesondere Diamine oder auch Wasser in Betracht zu ziehen.

Die Polyurethane sind vorzugsweise thermoplastisch und damit vorzugsweise im wesentlichen unvernetzt, d.h. wiederholt ohne nennenswerte Zersetzungserscheinungen schmelzbar. Ihre reduzierten spezifischen Viskositäten, gemessen bei 30°C in Dimethylformamid, liegen in der Regel bei 0,5 bis 3 dl/g, vorzugsweise bei 1 bis 2 dl/g.

Als aliphatische unvernetzte Polyepoxide seien hier nur Polymerisate von Glycidyl(meth)acrylat oder Epichlorhydrin mit geeigneten Comonomeren erwähnt. Bevorzugt werden Copolymerisate aus Epichlorhydrin und 2,2-Bis-(4-hydroxyphenyl)propan (Bisphenol A), die unter den Bezeichnungen Epikote® und Phenoxy® kommerziell erhältlich sind.

Geeignete Poly($C_2$-$C_6$)alkylenoxide sind insbesondere Polyethylenoxid, Polypropylenoxid und Polytetrahydrofuran (Poly(tetramethylen)oxid) mit mittleren Molekulargewichten (Zahlenmittelwert) im Bereich von 2000 bis 20 000, bevorzugt 4000 bis 10 000. Entsprechende Produkte sind im Handel erhältlich und Herstellungsverfahren dem Fachmann bekannt, so daß sich hier nähere Angaben erübrigen.

Geeignete aliphatische Polyamide sind insbesondere amorphe Polyamide oder Polyamide mit einem geringen kristallinen Anteil.

Eine bevorzugte Gruppe solcher Polyamide enthält Einheiten die sich ableiten von Diaminen der Formel

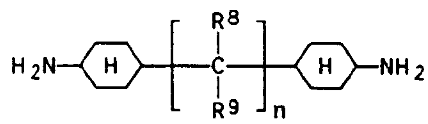

wobei $R^8$ und $R^9$ unabhängig voneinander jeweils H oder eine Methyl- oder Ethylgruppe bedeuten und n einen Wert im Bereich von 0 - 6 annimmt, und die Cyclohexylringe alkylsubstituiert sein können und aliphatischen Dicarbonsäuren wie Adipinsäure, Azelainsäure, Sebacinsäure und Dodecandisäure.

Diamine dieser Struktur werden im allgemeinen als Dicyan-Diamine bezeichnet; bevorzugte Diamine dieses Typs sind 4,4'-Diaminodicyclohexylmethan

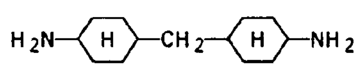

sowie die an den Cyclohexylringen methylsubstituierten Derivate davon.

Neben den vorstehenden Einheiten enthalten bevorzugte Polyamide bevorzugt weitere Einheiten, die sich von Lactamen oder Salzen aus weiteren aliphatischen Diaminen und aliphatischen Dicarbonsäuren ableiten.

Bevorzugte Lactame sind ε-Caprolactam und Önanthlactam, bevorzugte Salze solche aus Adipinsäure und Hexamethylendiamin. Das molare Verhältnis der unterschiedlichen Einheiten unterliegt keiner besonderen Beschränkung und kann daher in weiten Grenzen variieren.

Bevorzugt werden Polyamide mit Einheiten, die sich von ε-Caprolactam, Adipinsäure/Hexamethylendiamin und Adipinsäure/4,4'-Diaminodicyclohexylmethan ableiten.

Eine weitere bevorzugte Gruppe amorpher Polyamide enthält Einheiten, die sich von alkylsubstituierten Hexamethylendiaminen ableiten und den vorstehend genannten aliphatischen Dicarbonsäuren ableiten, wobei wiederrum weitere Einheiten der vorstehend beschriebenen Art vorhanden sein können.

Die Herstellung derartiger Polyamide erfolgt durch Polykondensation der Monomerbestandteile in den entsprechenden Anteilen; entsprechende Kondensationsverfahren sind dem Fachmann bekannt.

Als letzte Gruppe von Polymerisaten B2) seien Polyacrylate genannt wie sie z.B. in der DE 38 05 052 beschrieben sind.

Diese sind zu 40 - 100 Gew.-% aus Methylacrylat oder Ethylacrylat oder deren Mischungen und zu 0 - 60 Gew.-% aus Einheiten, die sich von Monomeren der Formel

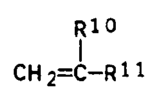

ableiten, aufgebaut. $R^{10}$ steht dabei für H oder einen Methylrest und $R^{11}$ für einen Phenylring oder einen Rest der Formel

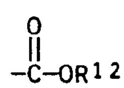

wobei $R^{12}$ eine Alkylgruppe mit 1 - 14 C-Atomen darstellt und $R^{12}$ nicht $-CH_3$ oder $-C_2H_5$ ist, wenn $R^{10}$ ein Wasserstoffatom ist.

Derartige Polyacrylate sind mit Polyoxymethylenhomo- und Copolymerisaten verträglich, was dadurch

zum Ausdruck kommt, daß die Mischung nur eine Glasübergangstemperatur (Tg) aufweist oder die Tg-Werte der Einzelkomponente sich verschieben. Derartige aus den Monomeren der Formel I und gegebenenfalls weiteren Monomeren, vorzugsweise der Formel II aufgebaute Polymere kann nach bekannten Polymerisationsverfahren vorzugsweise radikalisch, beispielsweise durch Emulsions- bzw. Perl-, Lösungs-oder Substanzpolymerisation hergestellt werden (vgl. Kirk-Othmer, Encyclopedia of Chemical Technology 3rd Ed., Vol. 1, pp. 330 - 342, Vol. 18, pp. 720 - 755, J. Wiley; H. Rauch-Puntigam, Th. Völker, Acryl- und Methacrylverbindungen). Als Initiator kommen Radikal-Initiatoren wie Peroxyverbindungen und Azoverbindungen in Frage, in Abhängigkeit von den Monomeren und dem Polymerisationstyp, wobei die Initiator-Mengen im allgemeinen im Bereich von 0,001 bis 0,5 Gew.-%, bezogen auf die Monomeren, liegen.

Für die Emulsionspolymerisation kommen z.B. Peroxydisulfate oder gegebenenfalls Redoxsysteme, für die Substanzpolymerisation sowohl Peroxide wie Dibenzoylperoxid oder Dilauroylperoxid, als Azoverbindungen z.B. Azoisobutyrodinitril in Betracht, ebenso bei Lösungspolymerisation oder Perlpolymerisation. Zur Regelung des Molekulargewichts können die üblichen Regler, insbesondere Mercaptane, z.B. Dodecylmercaptan angewendet werden.

Vorzugsweise erfolgt die Polymerisation bei erhöhter Temperatur z.B. oberhalb 50°C. Das Molekulargewicht liegt im allgemeinen im Bereich von 2000 bis 5 000 000 vorzugsweise 20 000 bis 3 000 000 (Bestimmung durch Lichtstreuung: Zur Bestimmung der Molgewichte vgl. Houben-Weyl, Methoden der Org. Chemie, 4. Auflage, Bd. 14/1, Georg Thieme-Verlag Stuttgart 1961).

Als Komponente C können die erfindungsgemäßen thermoplastischen Massen 0 - 5, vorzugsweise 1 - 5 Vol.-% eines Dispergierhilfsmittels enthalten. Beispielhaft sei hier nur oligomeres Polyethylenoxid mit einem mittleren Molekulargewicht von 200 - 400, Stearinsäure, Hydroxistearinsäure, Fettalkohole, Fettalkoholsulfonate und Blockcopolymere aus Ethylen- und Propylenoxid genannt.

Zusätzlich können die thermoplastischen Massen auch übliche Zusatzstoffe und Verarbeitungshilfsmittel, die die rheologischen Eigenschaften der Mischungen bei der Verformung günstig beeinflussen, enthalten.

Die Herstellung der thermoplastischen Massen kann durch Mischen der Komponenten A) und B) in üblichen Mischvorrichtungen wie Knetern, Mühlen oder Extrudern erfolgen. Bei der Abmischung auf Extrudern kann die Mischung extrudiert und granuliert werden.

Für die Verformung durch Spritzguß können die üblichen Schnecken- und Kolbenspritzgußmaschinen eingesetzt werden. Die Verformung erfolgt im allgemeinen bei Temperaturen von 170 bis 220°C und Drucken von 3000 bis 20 000 kPa in Formen, die eine Temperatur von 80 - 150°c aufweisen.

Zur Entfernung des Bindemittels (Entbinderung) werden die nach der Verformung enthaltenen Grünkörper vorzugsweise in Anlehnung an das Verfahren der älteren deutschen Patentanmeldungen P 39 29 869 bzw. 40 00 278 zunächst mit einer gasförmigen säurehaltigen Atmosphäre behandelt.

Diese Behandlung erfolgt nach den erfindungsgemäßen Verfahren im Falle der Verwendung eines Polyoxymethylencopolymerisats, von Poly-1,3-dioxolan, -dioxan oder -dioxepan als Komponente B2) bei Temperaturen im Bereich von 20 bis 160°C und im Falle der Verwendung von in B1) homogen gelösten Polymerisaten als Komponente B2) bei Temperaturen im Bereich von 20 bis 180°C über einen Zeitraum von 0,1 bis 24 h, vorzugsweise 0,5 bis 12 h.

Geeignete Säuren für die Behandlung in dieser ersten Stufe des erfindungsgemäßen Verfahrens sind anorganische, bei Raumtemperatur bereits gasförmige, zumindest aber bei der Behandlungstemperatur verdampfbare Säuren. Beispielhaft seien die Halogenwasserstoffsäuren und $HNO_3$ genannt. Geeignete organische Säuren sind solche, die bei Normaldruck eine Siedetemperatur von weniger als 130°C haben, z.B. Ameisensäure, Essigsäure oder Trifluoressigsäure oder deren Mischungen.

Weiterhin geeignet als Säure sind $BF_3$ oder $BF_3$-Etherate. Ganz allgemein hängt die erforderliche Behandlungsdauer von der Behandlungstemperatur und der Konzentration der Säure in der Behandlungstemperatur und der Konzentration der Säure in der Behandlungsatmosphäre, sowie von der Wandstärke der Formteile ab.

Wird ein Trägergas verwendet, so wird dies im allgemeinen vorher durch die Säure geleitet und mit dieser beladen. Das so beladene Trägergas wird dann auf die Behandlungstemperatur gebracht, die zweckmäßigerweise höher als die Beladungstemperatur ist, um eine Kondensation der Säure zu vermeiden.

Vorzugsweise wird die Säure dem Trägergas über eine Dosiereinrichtung zugemischt und die Mischung erwärmt, um eine Kondensation der Säure zu vermeiden.

Im Falle der Verwendung von in B1) homogen gelösten Polymerisaten als Komponente B2) wird die Behandlung in der ersten Stufe so lange durchgeführt, bis der Polyoxymethylenanteil B1) des Bindemittels zu mindestens 80 %, vorzugsweise zu mindestens 90 Gew.-%, entfernt ist. Dies läßt sich leicht an der Gewichtsabnahme erkennen. Anschließend wird das so erhaltene Produkt 0,1 bis 12, vorzugsweise 0,3 bis 6 h auf 250 bis 500, vorzugsweise 350 bis 500°C erhitzt, um den noch vorhandenen Rest des Bindemittels vollständig zu entfernen. Im Falle der Verwendung eines Polyoxymethylencopolymerisats, von Poly-1,3-dioxolan, -dioxan oder -dioxepan als Komponente B2) wird die Behandlung in der ersten Stufe so lange durchgeführt, bis das

Bindemittel praktisch vollständig entfernt ist. Anschließend kann das so erhaltene Produkt wie vorstehend beschrieben erhitzt werden. Dies ist in der Regel jedoch nicht erforderlich, da meist bereits bei der Säurebehandlung das Bindemittel vollständig entfernt wird.

Das so vom Bindemittel befreite Produkt kann in üblicher Weise durch Sintern in einen keramischen Formkörper überführt werden.

Die erfindungsgemäßen thermoplastischen Massen haben den Vorteil, daß die daraus hergestellten Grünkörper bzw. keramischen Formkörper auch bei großen Wandstärken frei von Rissen und Poren sind.

Beispiel 1

In einen Doppelwellenextruder mit 30 mm Wellendurchmesser wurden 5,6 kg/h eines Polyoxymethylens dosiert, das 2,5 Gew.-% Butandiolformial als Comonomeres enthielt. Das Material wurde bei 180°C aufgeschmolzen, die Wellendrehzahl betrug 70 Upm.

In einen seitlichen an diesen Extruder angeflanschten Extruder, der mit einer Förderwendel für Pulver ausgerüstet ist, wurden 16 kg/h einer Mischung aus 93 Gew.-% $Si_3N_4$-Pulver, 2 Gew.-% $Al_2O_3$-Pulver und 5 Gew.-% $Y_2O_3$-Pulver, die 2 Gew.-Teile eines Polyethylenoxids der Molmasse 400 g/Mol als Dispergator enthielt, dosiert und bis zum Ende der Förderstrecke auf 170°C erwärmt.

Am Ende der Förderstrecke wurde das Keramikpulver mit dem Polyoxymethylenstrom vermischt, die Mischung geschert, homogenisiert und als Stränge durch Düsen gepreßt. Die Stränge wurden in einem Luftstrom abgekühlt und granuliert. Das so erhaltene Granulat enthielt ca. 54 Vol.-% Keramikpulver. Es wurde im Zylinder einer Schneckenspritzgußmaschine bei 180°C aufgeschmolzen und in eine Form mit einer Wandtemperatur von 110°C gespritzt, um Zylinder mit einem Durchmesser von 50 mm und einer Höhe von 40 mm herzustellen. Der Anguß befand sich kegelförmig auf einer der Stirnflächen.

Die Gesamtzykluszeit betrug 90 Sekunden.

Nach dem Entformen wurden einige Zylinder längs der Achse auseinandergesägt. Es wurden eine Vielzahl von Rissen und Poren bis zu 6 mm Ausdehnung in der Mitte des Zylinders gefunden.

Beispiel 2

Beispiel 1 wurde wiederholt mit dem Unterschied, daß anstelle von 5,6 kg/h Polyoxymethylen eine Mischung aus 86 Gew.-% Polyoxymethylen und 14 Gew.-% eines aliphatischen Polyurethans auf der Basis von Hexamethylendiisocyanat, Adipinsäure, Ethylenglykol, Butandiol-1,4, Neopentylglykol und Hexandiol-1,6 mit einer Dichte von 1,14 g/cm³ und einer Shore A Härte von 72 (Baymod® PU-A der Bayer AG) aufgeschmolzen wurde.

Damit wurde ebenfalls ein Anteil von ca. 54 Vol.-% Keramikpulver in der Mischung erreicht. Die Spritzgußverarbeitung erfolgte unter den gleichen Bedingungen wie in Bsp. 1. Die Röntgendurchstrahlung zeigte keine Risse in den so hergestellten Zylindern.

Die sich anschließende Entbinderung wurde in einem nahezu dichten Trockenschrank mit einem Volumen von 50 l durchgeführt. Die Atmosphäre innerhalb des Trockenschranks wurde mittels eines Ventilators stark umgewälzt, um eine konstante Temperatur im gesamten Volumen und eine gute Wärmeübertragung auf den zu entbindernden Körper zu erreichen.

Der Trockenschrank wurde mit einem der spritzgegossenen Zylinder bestückt und zwar so, daß der Zylinder an einem Draht aufgehängt wurde, der durch das Gehäuse des Trockenschranks nach oben durchgeführt und mit einer Waage verbunden war, um kontinuierlich den Gewichtsverlust zu messen.

Danach wurde der Schrank 20 min lang mit einem Stickstoffstrom von 400 l/h durchströmt, um die Luft bis zu einem O-Gehalt kleiner als 1 - 2 % zu verdrängen. Gleichzeitig wurde die Atmosphäre im Trockenschrank auf 150°C aufgeheizt. Die Entbinderung wurde gestartet mit dem Zudosieren von 10 l/h $BF_3$ zum Stickstoffstrom von 400 l/h, so daß die Konzentration des $BF_3$ in der Dosierung 2,5 Vol-% betrug.

Bei einem Ausgangsgewicht des Zylinders von 202 g betrug der Binderanteil 25,3 Gew.-% entsprechend 51,1 g. Die folgende Tabelle zeigt die Gewichtsabnahme als Funktion der Zeit:

| Zeit (h) | Gewichtsabnahme (g) | Entbinderungsgrad (%) |
|---|---|---|
| 0,25 | 8,33 | 16,3 |
| 0,50 | 10,99 | 21,5 |
| 0,75 | 13,29 | 26,0 |
| 1 | 16,35 | 32,0 |
| 1,5 | 20,44 | 40,0 |
| 2 | 24,12 | 47,2 |
| 2,5 | 26,83 | 52,5 |
| 3 | 28,87 | 56,5 |
| 4 | 32,86 | 64,3 |
| 6 | 36,38 | 71,2 |
| 8 | 40,27 | 78,8 |
| 10 | 42,92 | 84,0 |
| 12 | 44,10 | 86,3 |

Danach wurde der Zylinder innerhalb von 1 h auf 500°C erhitzt und 1 h bei 500°C gehalten. Dabei nahm das Gewicht um weitere 9,3 g ab, entsprechend einem Entbinderungsgrad von 100 %. Der Zylinder zeigte weder Risse noch irgendeine Dimensionsänderung.

Beispiel 3

Beispiel 2 wurde wiederholt mit dem Unterschied, daß anstelle des aliphatischen Polyurethans ein amorphes Copolyamid bestehend aus gleichen molaren Anteilen Caprolactam, dem Salz aus Adipinsäure und Hexamethylendiamin sowie dem Salz aus Adipinsäure und 4,4'-Dicyclohexylmethandiamin eingesetzt wurde. Der Anteil an Keramikpulver betrug aufgrund der niedrigeren Dichte des Polyamids ca. 53 Vol.-%.

Nach der Spritzgußverarbeitung und dem Entbinden konnten keine Risse festgestellt werden.

Beispiel 4

Beispiel 2 wurde wiederholt mit dem Unterschied, daß anstelle des aliphatischen Polyurethans Polyethylenoxid mit einer mittleren Molmasse von 9000 g/Mol eingesetzt wurde. Die Dichte des Polyethylenoxidpulvers betrug 1,21 g/cm$^3$. Der Anteil an Keramikpulver betrug ca. 53 Vol.-%.

Nach der Spritzgußverarbeitung und dem Entbinden konnten keine Risse festgestellt werden.

Beispiel 5

Beispiel 2 wurde wiederholt, mit dem Unterschied, daß anstelle des aliphatischen Polyurethans ein Polyepoxid eingesetzt wurde, das durch Umsetzung vono 2 Molanteilen Bisphenol-A mit 2,6 Molanteilen Epichlorhydrin hergestellt wurde.

Der Anteil an Keramikpulver betrug ca. 54 Vol.-%. Nach der Spritzgußverarbeitung und dem Entbinden konnten keine Risse festgestellt werden.

Beispiel 6

Beispiel 2 wurde wiederholt, mit dem Unterschied, daß anstelle des aliphatischen Polyurethans ein Polyethylacrylat mit einer Molmasse von 100 000 eingesetzt wurde. Das Polyethylacrylat wurde durch Emulsionspolymerisation von Ethylacrylat in Wasser hergestellt. Dazu wurden als Emulgator 1 % Ammoniumstearat und als Initiator 0,5 % Ammoniumperoxodisulfat (bezogen auf die wäßrige Phase) eingesetzt. Die Polymerisationstemperatur betrug 70°C, der Anteil an Ethylacrylat 50 Gew.-%.

Die so erhaltene 50 %ige Dispersion von Polyethylacrylat in Wasser wurde in einem Extruder zu einer Schmelze von Polyoximethylen gepumpt, mit der Schmelze geknetet und dann das Wasser verdampft, um eine Mischung von 87 Gew.-Teilen Polyoxymethylen und 13 Gew.-Teilen Polyethylacrylat zu erhalten. Diese Polymermischung wurde wie in Beispiel 1 aufgeschmolzen und mit einem Strom an Keramikpulver vermischt, um

eine Grünmasse zu erhalten, die 54 Vol.-% Keramikpulver (Siliziumnitrid incl. Additive) enthielt.

Nach der Spritzgußverarbeitung und dem Entbinden konnten keine Risse festgestellt werden.

Beispiel 7

Beispiel 6 wurde wiederholt, mit dem Unterschied, daß anstelle des Polyethylacrylats Polymethylacrylat eingesetzt wurde. Das Polymethylacrylat wurde entsprechend dem Polyethylacrylat durch Emulsionspolymerisation hergestellt und mit der Polyoxymethylenschmelze vermischt. Entsprechend Beispiel 1 wurde die Polymermischung aufgeschmolzen und mit dem Keramikpulver vermischt, um eine Grünmasse zu erhalten, die 54 Vol.-% Siliziumnitrid incl. Additive enthielt.

Nach der Spritzgußverarbeitung und dem Entbinden konnten keine Risse festgestellt werden.

Beispiel 8 (erfindungsgemäß)

In einen Doppelwellenextruder mit 30 mm Wellendurchmesser wurden 5,6 kg/h einer Granulatmischung aus 4,5 kg entsprechend 80 Gew.-% eines Polyoxymethylencopolymeren mit einem Anteil von 6 Mol-% Butandiolformal als Comonomer (Komponente B1) und 1,1 kg entsprechend 20 Gew.-% eines Polyoxymethylencopolymeren mit einem Anteil von 50 Mol-% 1,3-Dioxolan als Comonomer (Komponente B2) dosiert. Der Schmelzpunkt von Komponente B1 beträgt 161°C, der Schmelzpunkt der Komponente B2 beträgt 138°C. Bei Komponente B2 handelt es sich um ein Material, das erst nach längerer Temperzeit bei 90°C kristallisiert und aufgrund des niedrigen kristallinen Anteils etwas klebrig ist.

Die Granulatmischung wurde bei 180°c aufgeschmolzen, die Wellendrehzahl betrug 70 Upm.

In einen seitlichen an diesen Extruder angeflanschten Extruder, der mit einer Förderwendel für Pulver ausgerüstet war, wurden 16 kg/h einer Mischung aus 93 Gew.-% $Si_3N_4$-Pulver, 2 Gew.-% Al2O3-Pulver und 5 Gew.-% $Y_2O_3$-Pulver, die 2 Gew.-% eines Polyethylenoxids der Molmasse 400 g/Mol als Dispergator enthielt, dosiert und bis zum Ende der Förderstrecke auf 170°C erwärmt.

Am Ende der Förderstrecke wurde das Keramikpulver mit dem Polyoxymethylenstrom vermischt, die Mischung geschert, homogenisiert und als Stränge durch Düsen gepreßt. Die Stränge wurden in einem Luftstrom abgekühlt und granuliert. Das so erhaltene Granulat enthielt ca. 54 Vol-% Keramikpulver. Es wurde im Zylinder einer Schneckenspritzgußmaschine bei 200°C aufgeschmolzen und in eine Form mit einer Wandtemperatur von 120°c gespritzt, um Schulterstäbe mit einer Länge von 150 mm, einer Breite von 10 mm und einer Dicke von 4 mm für Zugprüfungen herzustellen. Der Anguß befand sich am Stabende.

Die Gesamtzykluszeit betrug 90 Sekunden.

Die sich anschließende Entbinderung wurde in einem nahezu dichten Trockenschrank mit einem Volumen von 50 l durchgeführt. Die Atmosphäre innerhalb des Trockenschranks wurde mittels eines Ventilators stark umgewälzt, um eine konstante Temperatur im gesamten Volumen und eine gute Wärmeübertragung auf den zu entbindernden Körper zu erreichen.

Der Trockenschrank wurde mit spritzgegossenen Stäben bestückt und zwar so, daß die Stäbe auf je zwei Auflager mit 130 mm Entfernung mit der breiten Seite aufgelegt wurden. Ein Stab wurde in ein Netz gelegt, das an einem Draht aufgehängt wurde, der durch das Gehäuse des Trockenschranks nach oben durchgeführt und mit einer Waage verbunden war, um kontinuierlich den Gewichtsverlust zu messen.

Danach wurde der Schrank 20 min lang mit einem Stickstoffstrom von 400 l/h durchströmt, um die Luft bis zu einem $O_2$-Gehalt von weniger als 1 - 2 % zu verdrängen. Gleichzeitig wurde die Atmosphäre im Trockenschrank auf 150°C aufgeheizt. Die Entbinderung wurde gestartet mit dem Zudosieren von 10 l/h $BF_3$ zum Stickstoffstrom von 400 l/h, so daß die Konzentration des $BF_3$ in der Dosierung 2,5 Vol-% betrug.

Bei einem Ausgangsgewicht der Stäbe von 95,4 g betrug der Binderanteil 25,8 Gew.-% entsprechend 24,6 g. Die folgende Tabelle zeigt die Gewichtsabnahme als Funktion der Zeit:

| Zeit (min) | Gewichtsabnahme (g) | Entbinderungsgrad (%) |
|---|---|---|
| 1 | 2,46 | 10 |
| 2 | 3,7 | 15 |
| 5 | 7,38 | 30 |
| 10 | 11,32 | 46 |
| 15 | 14,76 | 60 |
| 20 | 17,22 | 70 |
| 25 | 19,68 | 80 |
| 30 | 22,14 | 90 |
| 35 | 24,6 | 100 |

Nach vollständiger Entbinderung nach 35 min wurde der Trockenschrank abgekühlt und geöffnet. Die Stäbe hatten sich nicht durchgebogen.

Beispiel 9 (Vergleichsbeispiel)

Beispiel 8 wurde wiederholt mit dem Unterschied, daß anstelle der Mischungen B1 und B2 ein einheitliches Polyoxymethylencopolymeres mit 15 mol-% Butandiolformal eingesetzt wurde. Damit enthielt die Bindermasse ebensoviel Comonomeranteil wie im Beispiel 8. Das Polyoxymethylencopolymere wies einen Schmelzpunkt von 152°C auf. Schon beim Abkühlen der Stränge aus dem Extruderaustrag fiel auf, daß die Stränge längere Zeit weich blieben als die im Beispiel 8. Unter Berücksichtigung der niedrigeren Binderdichte wurde ebenfalls wieder ein Anteil an Keramikpulver von ca. 54 Vol-% eingestellt. Die sich anschließende Spritzgußverarbeitung mußte jedoch anders durchgeführt werden:

Aufgrund der erniedrigten Schmelztemperatur des Polyoxymethylens mit 15 mol-% Comonomer-Einheiten wurde die Massetemperatur beim Spritzgießen auf 180°C heruntergesetzt. Die Formtemperatur mußte auf ca. 50°C herabgesetzt werden, weil die Teile sich durch Kleben in der Form kaum entformen ließen. Um ein einwandfreies Entformen zu gewährleisten, mußte auch die Abkühlzeit in der Form soweit erhöht werden, daß sich die Gesamtzykluszeit von 90 sec in Beispiel 8 auf 200 sec erhöhte.

Die erhaltenen Stäbe wurden wie in Beispiel 8 bie 150°C der Entbinderungsprozedur ausgesetzt, wobei der Trockenschrank nach 35 min abgekühlt wude. Die Stäbe hingen zwischen den Auflagern vollständig durch.

Beispiel 10 (Vergleichsbeispiel)

Die Stäbe aus Beispiel 9 wurden bei 110°C anstelle 150°C entbindert. Zur vollständigen Entbinderung wurden 385 min benötigt. Trotz der erniedrigten Entbinderungstemperatur hingen die Stäbe zwischen den Auflagen um ca. 10 mm durch.

Beispiel 11 (erfindungsgemäß)

Beispiel 8 wurde wiederholt, wobei jedoch als Komponente B2) reines Poly-1,3-dioxolan eingesetzt wurde. Das Poly-1,3-dioxolan wurde hergestellt, indem unter wasserfreien Bedingungen in 2 kg reines 1,3-Dioxolan ca. 5 ppm Perchlorsäure, verdünnt in trockenem Ether eindosiert wurden. Das Gemisch wurde langsam auf 45°C erwärmt, wonach die Polymerisation unter Temperaturanstieg rasch einsetzte und die Mischung sehr schnell hochviskos wurde. Nach ca. 1 h Stehenlassen bei 60°C wurde die zur Neutralisation der Perchlorsäure äquivalente Menge Triethanolamin, gelöst in 1,3-Dioxolan zudosiert, die Temperatur auf 140°C erhöht und flüchtige Monomere sowie Etherreste über 8 h bei einem Vakuum von 10 mbar (1000 Pa) abdestilliert.

Das amorphe Poly-1,3-dioxolan wurde abkühlen gelassen, wobei es innerhalb von zwei Tagen bei Raumtemperatur soweit kristallisierte, daß es nach Zerschlagen des Glaskolbens durch eine Schuppwalze zu Schuppen zerkleinert werden konnte. Der Schmelzpunkt betrug ca. 65°C.

In einem Doppelwellenextruder mit 30 mm Wellendurchmesser wurden 5,6 kg/h einer Granulatmischung den 4,93 kg/h entsprechend 88 Gew.-% eines Polyoxymethylencopolymeren mit einem Anteil von 6 mol-% Butandiolformal als Comonomer (Komponente B1) und 0,67 kg/h des Poly-1,3-dioxolans als Komponente B2) dosiert.

Die Granulatmischung wurde bei 180°C °C aufgeschmolzen, die Wellendrehzahl betrug 70 Upm.

In einen seitlichen an diesen Extruder angeflanschten Extruder, der mit einer Förderwendel für Pulver ausgerüstet ist, wurden 16 kg/h einer Mischung aus 93 Gew.-% $Si_3N_4$-Pulver, 2 Gew.-% $Al_2O_3$-Pulver und 5 Gew.-% $Y_2O_3$-Pulver, die 2 Gew.-Teile eines Polyethylenoxids der Molmasse Am Ende der Förderstrecke wurde das Keramikpulver mit dem Polyoxymethylenstrom vermischt, die Mischung geschert, homogenisiert und als Stränge durch Düsen gepreßt. Die Stränge wurden in einem Luftstrom abgekühlt und granuliert. Das so erhaltene Granulat enthielt ca. 54 Vol-% Keramikpulver. Es wurde wie im ersten Beispiel zu Prüfkörpern verarbeitet und unter den gleichen Bedingungen entbindert. Diese Stäbe waren nach 55 min vollkommen entbindert, und sie hatten sich nicht durchgebogen.

Beispiel 12 (erfindungsgemäß)

In einem thermostatbeheizten Kneter mit einem Nutzvolumen von 6 Litern wurden unter Ausschluß von Feuchtigkeit 0,5 kg 1,3-Dioxepan dosiert, welches nach Zugabe von 2 ppm Perchlorsäure (gelöst in Diethylenglykolmonomethylether) rasch polymerisierte. Nach der Polymerisation wurde das Polymerisat mit 3 ppm Triethanolamin (gelöst in Diethylenglykolmonomethylether) neutralisiert.

Anschließend wurde der Kneter auf 180°C erhitzt und 2,3 kg eines Polyoxymethylencopolymeren mit einem Comonomerenanteil von 6 mol-% Butandiolformal zugegeben und innig mit dem 1,3-Dioxepan vermischt.

Die Mischung enthielt 82 Gew.-% des Polyoxymethylencopolymeren (Komponente B1) und 18 Gew.-% 1,3-Dioxepan (Komponente B2). Im Verlauf einer Stunde wurden 10,9 kg (entsprechend 54 Vol.-% der endgültigen Mischung) an auf 180°C erwärmten $Al_2O_3$ zugegeben. Als Verarbeitungshilfsmittel wurde 1 Stearinsäureamid in einer Menge von 1 Gew.-%, bezogen auf den Bindemittelanteil, zugegeben.

Nach einer Stunde innigem Kneten wurde das erhaltene Produkt abgekühlt und die dabei entstehende krümelige Masse zu Bruchstücken von 2 - 3 mm Korngröße gemahlen. Das Mahlgut wurde wie in Beispiel 8 zu Prüfkörpern verarbeitet und unter den Bedingungen von Beispiel 8 entbindert.

Nach 35 min war das Bindemittel vollständig entfernt, ohne daß eine Durchbiegung der Stäbe zu erkennen war.

## Patentansprüche

1. Thermoplastische Massen für die Herstellung keramischer Formkörper, enthaltend
   A) 40 - 65 Vol.% eines sinterbaren anorganischen nichtmetallischen Pulvers
   B) 35 - 60 Vol.% einer Mischung aus
      B1) 70 - 90 Gew.- % eines Polyoxymethylenhomo- oder -copolymerisats mit bis zu 10 mol-% Comonomereinheiten und
      B2) 10 - 30 Gew.-% eines Polyoxymethylencopolymerisats mit einem Comonomeranteil von 20 bis 99 mol-%, oder Poly-1,3-dioxolan, oder Poly-1,3-dioxan oder Poly-1,3-dioxepan, oder eines in B1) homogen gelösten oder mit einer mittleren Teilchengröße von weniger als 1 µm in B1) dispergierten Polymerisats oder deren Mischungen

   als Bindermittel, und
   C) 0 - 5 Vol.% eines Dispergierhilfsmittels.

2. Thermoplastische Massen nach Anspruch 1, dadurch gekennzeichnet, daß die Komponente B2) ein Polyoxymethylencopolymerisat mit einem Comonomeranteil von 20 bis 99 mol-%, Poly-1,3-dioxolan, Poly-1,3-dioxan oder Poly-1,3-dioxepan oder eine Mischung daraus ist.

3. Thermoplastische Massen nach Anspruch 1, dadurch gekennzeichnet, daß als Komponente B2) aliphatische Polyurethane, aliphatische unvernetzte Polyepoxide, Poly($C_2$-$C_6$-alkylenoxide), aliphatische Polyamide oder Polyacrylate oder deren Mischungen enthalten sind.

4. Thermoplastische Massen nach den Ansprüchen 1 bis 3, dadurch gekennzeichnet, daß die Komponente A) $Al_2O_3$, $ZrO_2$, $Y_2O_3$, SiC, $Si_3N_4$, TiB und AlN oder eine Mischung daraus ist.

5. Verwendung der thermoplastischen Massen nach den Ansprüchen 1 - 4, zur Herstellung von keramischen Formkörpern.

6. Grünkörper, hergestellt aus thermoplastischen Massen gemäß den Ansprüchen 1 - 4.

7. Verfahren zur Entfernung des Bindemittels aus einem Formkörper aus einer thermoplastischen Masse

gemäß den Ansprüchen 1, 2 oder 4, dadurch gekennzeichnet, daß man
a) durch Spritzguß oder Extrusion einen Formkörper aus der thermoplastischen Masse herstellt, und
b) den so erhaltenen Formkörper bei einer Temperatur im Bereich von 20 bis 160°C 0,1 bis 24 h mit einer gasförmigen säurehaltigen Atmosphäre behandelt.

8. Verfahren zur Entfernung des Bindemittels aus einem Formkörper aus einer thermoplastischen Masse gemäß den Ansprüchen 1, 3 oder 4, dadurch gekennzeichnet, daß man
a) durch Spritzguß oder Extrusion einen Formkörper aus der thermoplastischen Masse herstellt,
b) den so erhaltenen Formkörper bei einer Temperatur im Bereich von 20 bis 180°C 0,1 - 24 h mit einer gasförmigen säurehaltigen Atmosphäre behandelt und
c) anschließend 0,1 - 12 h auf eine Temperatur von 250 - 500°C erhitzt.

## Claims

1. A thermoplastic material for the production of ceramic moldings, containing
A) 40-65% by volume of a sinterable inorganic non-metallic powder,
B) 35-60% by volume of a mixture of
B1) 70-90% by weight of a polyoxymethylene homo- or copolymer containing up to 10 mol % of comonomer units and
B2) 10-30% by weight of a polyoxymethylene copolymer with a comonomer content of from 20 to 99 mol %, or poly-1,3-dioxolane, or poly-1,3-dioxane or poly-1,3-dioxepan, or of a polymer which is homogeneously dissolved or is dispersed with a mean particle size of less than 1 μm in B1), or a mixture thereof,
as a binder, and
C) 0-5% by volume of a dispersant.

2. A thermoplastic material as claimed in claim 1, wherein component B2) is a polyoxymethylene copolymer with a comonomer content of from 20 to 99 mol %, poly-1,3-dioxolane, poly-1,3-dioxane or poly-1,3-dioxepan or a mixture thereof.

3. A thermoplastic material as claimed in claim 1, wherein an aliphatic polyurethane, an aliphatic uncrosslinked polyepoxide, a poly-($C_2$-$C_6$-alkylene oxide), an aliphatic polyamide or a polyacrylate or a mixture thereof is used as component B2).

4. A thermoplastic material as claimed in any of claims 1 to 3, wherein component A) is $Al_2O_3$, $ZrO_2$, $Y_2O_3$, SiC, $Si_3N_4$, TiB or AlN or a mixture thereof.

5. Use of a thermoplastic material as claimed in any of claims 1 to 4 for the production of ceramic moldings.

6. A green compact produced from a thermoplastic material as claimed in any of claims 1 to 4.

7. A process for removing the binder from a molding of a thermoplastic material as claimed in claim 1, 2 or 4, wherein
a) a molding is produced from the thermoplastic material by injection molding or extrusion, and
b) the molding thus obtained is treated with a gaseous acid-containing atmosphere at from 20 to 160°C for 0.1-24 h.

8. A process for removing the binder from a molding of a thermoplastic material as claimed in claim 1, 3 or 4, wherein
a) a molding is produced from the thermoplastic material by injection molding or extrusion and
b) the molding thus obtained is treated with a gaseous acid-containing atmosphere at from 20 to 180°C for 0.1-24 h and
c) is then heated at 250-500°C for 0.1-12 h.

## Revendications

1. Matières thermoplastiques pour la préparation d'articles moulés céramiques, qui contiennent :

A) 40 à 65% en volume d'une poudre non métallique, inorganique, frittable,
B) 35 à 60% en volume d'un mélange constitué de :
B1) 70 à 90% en poids d'un homopolymère ou d'un copolymère de polyoxyméthylène avec jusqu'à 10% molaires d'unités comonomériques, et
B2) 10 à 30% en poids d'un copolymère de polyoxyméthylène avec une fraction comonomérique de 20 à 99% molaires, soit de poly-1,3-dioxolanne, ou de poly-1,3-dioxanne, ou de poly-1,3-dioxépanne, ou d'un polymère dissous de manière homogène dans B1), ou dispersé dans B1) avec un calibre moyen des particules inférieur à 1 µm, ou de leurs mélanges,
servant de liant, et
C) 0 à 5% en volume d'un adjuvant de dispersion.

**2.** Matières thermoplastiques suivant la revendication 1, caractérisées en ce que le composant B2) est un copolymère de polyoxyméthylène avec une fraction comonomérique de 20 à 99% molaires, de poly-1,3-dioxolanne, de poly-1,3-dioxanne, ou de poly-l,3-dioxépanne, ou un mélange de ceux-ci.

**3.** Matières thermoplastiques suivant la revendication 1, caractérisées en ce qu'elles contiennent, à titre de composant B2), des polyuréthannes aliphatiques, des polyépoxydes aliphatiques non réticulés, des poly-(oxydes d'alkylène en $C_2$-$C_6$), des polyamides aliphatiques, ou des polyacrylates, ou leurs mélanges.

**4.** Matières thermoplastiques suivant les revendications 1 à 3, caractérisées en ce que le composant A) est $Al_2O_3$, $ZrO_2$, $Y_2O_3$, SiC, $Si_3N_4$, TiB et AlN ou un mélange de ceux-ci.

**5.** Utilisation des matières thermoplastiques suivant l'une quelconque des revendications 1 à 4, en vue de la fabrication d'articles moulés céramiques.

**6.** Corps ou articles à l'état vert, réalisés à partir des matières thermoplastiques suivant l'une quelconque des revendications 1 à 4.

**7.** Procédé d'élimination du liant d'un article moulé à partir d'une matière thermoplastique suivant les revendications 1, 2 ou 4,
caractérisé en ce que
a) on fabrique un article moulé à partir de la matière thermoplastique par moulage par injection ou par extrusion, et
b) on traite l'article moulé ainsi obtenu à une température qui fluctue dans la plage de 20 à 160°C, pendant 0,1 à 24 heures, par une atmosphère gazeuse contenant de l'acide.

**8.** Procédé d'élimination du liant d'un article moulé à partir d'une matière thermoplastique suivant les revendications 1, 3 ou 4,
caractérisé en ce que
a) on fabrique un article moulé à partir de la matière thermoplastique par moulage par injection ou par extrusion,
b) on traite l'article moulé ainsi obtenu à une température qui varie dans la plage de 20 à 180°C pendant 0,1 à 24 heures par une atmosphère gazeuse contenant un acide, et
c) on le chauffe ensuite à une température de 250 à 500°C pendant 0,1 à 12 heures.